# EUROPEAN PATENT SPECIFICATION

(11) **EP 4 109 646 B1**
(45) Date of publication and mention of the grant of the patent: **21.10.2026**
(21) Application number: 21872730.3
(22) Date of filing: 23.08.2021
(51) Int. Cl.: H01M 50/20, H01M 10/6551, H01M 10/647, H01M 50/502, H01M 10/04, H01M 50/242, H01M 50/211, H01M 50/224, H01M 50/293, H01M 50/264

(54) **BATTERY PACK WITH INCREASED LIFESPAN OF BATTERY CELL AND DEVICE INCLUDING THE SAME**
BATTERIEPACK MIT VERLÄNGERTER LEBENSDAUER DER BATTERIEZELLE UND VORRICHTUNG DAMIT
BLOC-BATTERIE PRÉSENTANT UNE DURÉE DE VIE ACCRUE DES CELLULES DE BATTERIE ET DISPOSITIF LE COMPRENANT

(30) Priority: 22.09.2020 KR 20200121927
(43) Date of publication of application: 28.12.2022
(60) Divisional application: 25150889.1 / 4 513 648
(73) Proprietor: LG Energy Solution, Ltd., Seoul 07335 (KR)
(72) Inventor: LEE, Jung Hoon, Daejeon 34122 (KR); YANG, Jae Hun, Daejeon 34122 (KR); JEONG, Sang Yoon, Daejeon 34122 (KR); HA, Jong Soo, Daejeon 34122 (KR); KIM, Se Ho, Daejeon 34122 (KR)
(74) Representative: Plasseraud IP
(86) International application number: PCT/KR2021/011201
(87) International publication number: WO 2022/065700

(56) References cited:
- EP-B1- 3 039 731
- CN-A- 106 329 030
- CN-U- 209 071 408
- DE-A1- 102010 012 930
- JP-A- 2004 055 346
- JP-A- 2016 103 328
- JP-A- 2019 125 455
- KR-A- 20190 031 831
- US-A1- 2015 064 514

## Description

### [Technical Field]

This application claims the benefit of priority to Korean Patent Application No. 2020-0121927 filed on September 22, 2020.

The present invention relates to a battery pack and a device including the same, and more particularly to a battery pack with increased lifespan of a battery cell configured to have a structure in which pressure applied to the battery cell is maintained at an appropriate level, whereby lifespan of the battery cell is extended, and a device including the same.

### [Background Art]

With recent development of alternative energies due to air pollution and energy depletion caused as the result of use of fossil fuels, demand for secondary batteries capable of storing electrical energy that is produced has increased. The secondary batteries, which are being capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, a battery cell swells during repeated charging and discharging thereof, whereby the overall volume of the battery cell is increased. In order to increase lifespan of the battery cell, however, electrical contact between an electrode and an active material must be improved. To this end, it is necessary to constantly apply a predetermined level of pressing force to the battery cell.

FIG. 1 is a perspective view showing the structure of a conventional battery module known from JP 2019-125455 A. As shown in FIG. 1, the conventional battery module includes a plurality of single cells 10 disposed perpendicular to a heat sink 20, a case 30 configured to wrap the plurality of single cells 10 in order to protect the plurality of single cells, pressing plates 40 located at opposite sides of the plurality of single cells 10 vertically disposed, and pressure adjustment members 50 located between the pressing plates 40 and the case 30.

The conventional battery module is configured to have a structure in which the pressure adjustment members 50, which are elastic members, are located between the case 30 and the pressing plates 40 in order to press the opposite sides of the single cells 10, whereby an increase in volume of the single cells at the time of swelling is inhibited.

In the conventional battery module, however, only pressing is performed and no pressure adjustment function is provided. As a result, it is not possible to increase lifespan of the battery cells.

Further prior art is described in DE 10 2010 012930 A1 which does not disclose a pack cover and an elastic member between a pack cover and an upper pressing plate. EP 3 039 731 B1 discloses that spacers can be applied between vertically stacked electrical energy storage cell modules.

### [Disclosure]

### [Technical Problem]

The present invention has been made in view of the above problems, and it is an object of the present invention to provide a battery pack having a structure capable of constantly pressing a battery cell within a predetermined range irrespective of swelling of the battery cell and a device including the same, and to increase the pressing force applied to battery cells inside the battery pack.

### [Technical Solution]

In order to accomplish the above objects, a battery pack according to the present invention includes a plurality of battery modules (1000) stacked in a vertical direction in a horizontal state; a pressing plate (2100) including an upper pressing plate (2110) and a lower pressing plate (2120) located outside the plurality of battery modules (1000); first (2210) and second elastic members (2220) configured to connect the upper pressing plate (2110) and the lower pressing plate (2120) to each other with a tensile force; and a pack case (2300) configured to wrap the pressing plate (2100), wherein the pack case (2300) includes an upper pack cover (2310) and a lower pack cover (2320), and a third elastic member (2230) is provided between the upper pack cover (2310) and the upper pressing plate (2110) to provide a pressing force, wherein a distance retention portion (2500) configured to supplement tensile force is further provided between the upper pack cover (2310) and the upper pressing plate (2110).

Also, in the battery pack according to the present invention, the distance retention portion (2500) may be a quadrangular pillar.

Also, in the battery pack according to the present invention, the distance retention portion (2500) may be made of a metal material.

In addition, the present invention provides a device including the battery pack.

### [Advantageous Effects]

As is apparent from the above description, a battery pack with increased lifespan of a battery cell according to the present invention and a device including the same have an advantage in that an elastic member is provided between an upper pressing plate and a lower pressing plate, whereby it is possible to constantly press battery cells interposed between the upper and lower pressing plates within a predetermined range, and therefore it is possible to increase lifespan of the battery cells.

Furthermore, the battery pack with increased lifespan of the battery cell according to the present invention and the device including the same have an advantage in that the battery cells, a support plate, etc. are fastened to each other via a plurality of support frames and fastening members, whereby it is possible to maintain uniform adhesion force between the battery cells and the heat sink while maximizing space utilization.

### [Description of Drawings]

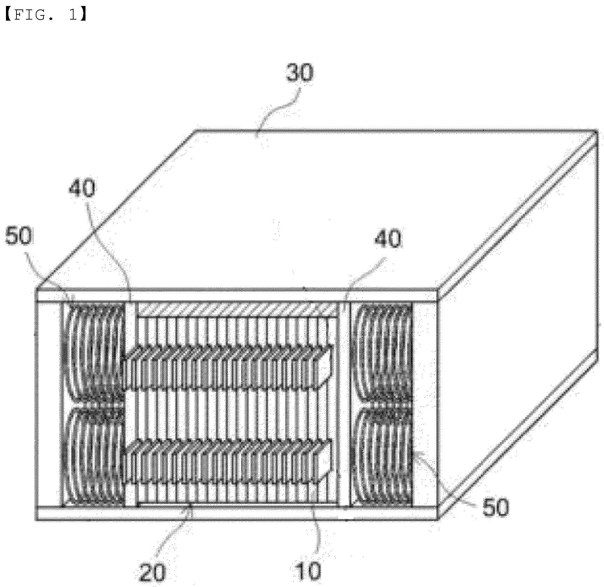

FIG. 1 is a perspective view of a conventional battery module.
FIG. 2 is a perspective view of a battery pack according to a preferred embodiment of the present invention.
FIG. 3 is an exploded perspective view of the battery pack shown in FIG. 2.
FIG. 4 is a sectional view taken along line A-A' of FIG. 2.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack with increased lifespan of a battery cell according to the present invention will be described with reference to the accompanying drawings.

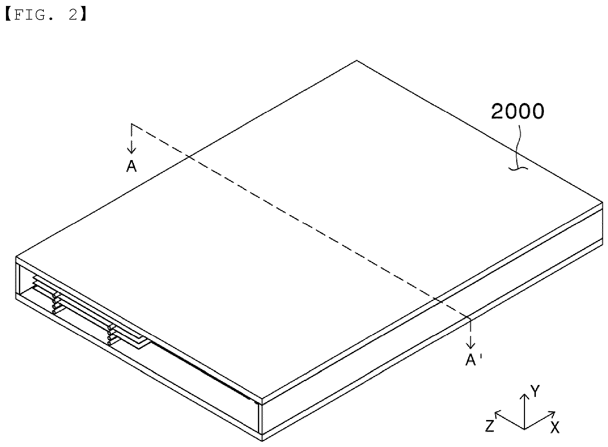

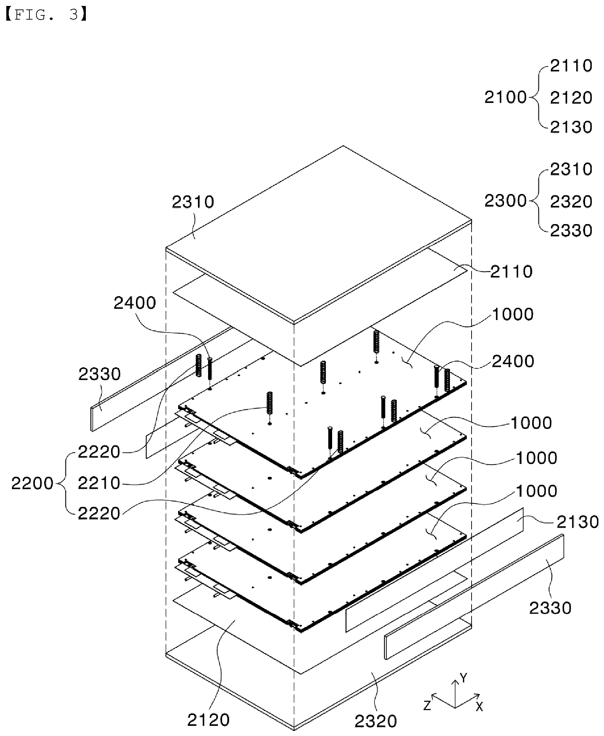

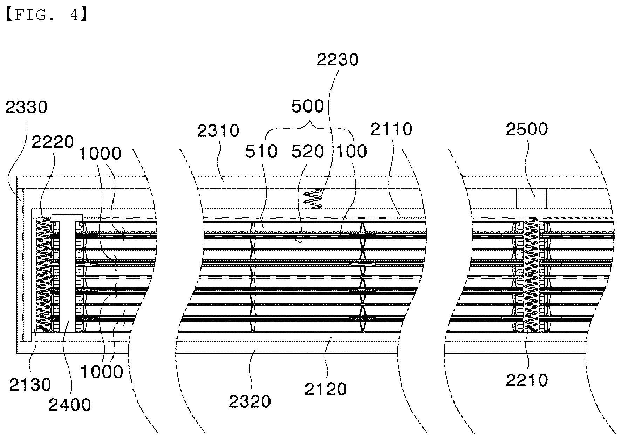

FIG. 2 is a perspective view of a battery pack according to a preferred embodiment of the present invention, FIG. 3 is an exploded perspective view of the battery pack shown in FIG. 2, and FIG. 4 is a sectional view taken along line A-A' of FIG. 2.

As shown in FIGS. 2 to 4, the battery pack 2000 according to the present invention includes a plurality of horizontally stacked battery modules 1000, a pressing plate 2100 located at the upper surface and the lower surface of the plurality of stacked battery modules 1000, an elastic member 2200, a pack case 2300, a plurality of fastening members 2400 configured to fix the battery modules 1000, and a distance retention portion 2500.

First, the pressing plate 2100 includes an upper pressing plate 2110 located on the upper surface of the stacked battery modules 1000 in tight contact therewith, a lower pressing plate 2120 located on the lower surface of the stacked battery modules 1000 in tight contact therewith, and a plurality of side plates 2130 located at opposite side surfaces of the battery modules 1000 in a state of being spaced apart therefrom by a predetermined distance.

The elastic member 2200 includes a first elastic member 2210, a second elastic member 2220, and a third elastic member 2230. One side of each of a plurality of first elastic members 2210, which are inserted perpendicularly through middle parts of the battery modules 1000, is connected to the upper pressing plate 2110, and the other side of each of the first elastic members is connected to the lower pressing plate 2120. Since middle parts of the upper pressing plate 2110 and the lower pressing plate 2120 are pulled, therefore, it is possible to constantly press battery cells 500 located at the middle parts of the battery modules 1000 within a predetermined range irrespective of swelling.

The second elastic member 2220, which connects the upper pressing plate 2110 and the lower pressing plate 2120, specifically the edge of the upper pressing plate 2110 and the edge of the lower pressing plate 2120, to each other, constantly presses battery cells 500 located at edges of the battery modules 1000 within a predetermined range.

The first elastic member 2210 and the second elastic member 2220 provide tensile force between the upper pressing plate 2110 and the lower pressing plate 2120, whereas the third elastic member 2230 is located between the upper pressing plate 2110 and an upper pack cover 2310 to provide pressing force. In particular, it is preferable for the third elastic member 2230 to be provided in plural in a state of being spaced apart from each other by a predetermined distance. The third elastic member inhibits bending of the pressing plate that may be caused by a swelling deviation between the battery cells, whereby it is possible to minimize a deviation in pressing force.

Here, each of the first elastic member 2210, the second elastic member 2220, and the third elastic member 2230 may be a coil. However, the present invention is not limited thereto.

The pack case 2300 includes an upper pack cover 2310 located at the upper surface of the upper pressing plate 2110, a lower pack cover 2320 located at the lower surface of the lower pressing plate 2120, and side pack covers 2330 located parallel to the side plates 2130.

The fastening members 2400 are configured to fix the plurality of battery modules 1000, which are stacked in a vertical direction, using predetermined force. As an example, each of the fastening members may be a bolt having a screw thread formed at one end thereof, and a nut may be fastened to the other side of the fastening member in order to fix the battery modules 1000.

Of course, it is preferable for the nuts to be somewhat loosely fastened to the fastening members in consideration of expansion of the battery modules upon swelling.

Meanwhile, the distance retention portion 2500 is further provided between the upper pressing plate 2110 and the upper pack cover 2310 at the middle thereof in order to supplement tensile force by the first elastic member 2210 and pressing force by the third elastic member 2230. The distance retention portion may be a quadrangular pillar made of metal.

The present invention provides a device including a battery pack having at least one of the above-mentioned features, and the device may be an electric vehicle, a hybrid electric vehicle, or a plug-in hybrid electric vehicle.

### (Description of Reference Symbols)

500: Battery cell
510: First battery cell
511: Electrode lead
520: Second battery cell
600: Cover plate
610: Upper cover plate
620: Lower cover plate
2000: Battery pack
2100: Pressing plate
2110: Upper pressing plate
2120: Lower pressing plate
2130: Side plate
2200: Elastic member
2210: First elastic member
2220: Second elastic member
2230: Third elastic member
2300: Pack case
2310: Upper pack cover
2320: Lower pack cover
2330: Side pack cover
2400: Fastening member
2500: Distance retention portion

## Claims

1. A battery pack (2000) comprising:
a plurality of battery modules (1000) stacked in a vertical direction in a horizontal state;
a pressing plate (2100) comprising an upper pressing plate (2110) and a lower pressing plate (2120) located outside the plurality of battery modules (1000);
first (2210) and second elastic members (2220) configured to connect the upper pressing plate (2110) and the lower pressing plate (2120) to each other with a tensile force; and
a pack case (2300) configured to wrap the pressing plate (2100),
wherein the pack case (2300) comprises an upper pack cover (2310) and a lower pack cover (2320), and
**characterized in that** a third elastic member (2230) is provided between the upper pack cover (2310) and the upper pressing plate (2110) to provide a pressing force,
wherein a distance retention portion (2500) configured to supplement tensile force is further provided between the upper pack cover (2310) and the upper pressing plate (2110).

2. The battery pack (2000) according to claim 1, wherein the distance retention portion (2500) is a quadrangular pillar.

3. The battery pack (2000) according to claim 1, wherein the distance retention portion (2500) is made of a metal material.

4. A device comprising the battery pack according to claim 1.

## Patentansprüche

1. Batteriepack (2000), umfassend:
• eine Vielzahl von Batteriemodulen (1000), die in horizontaler Lage in einer vertikalen Richtung gestapelt sind;
• eine Pressplatte (2100), umfassend eine obere Pressplatte (2110) und eine untere Pressplatte (2120), die sich außerhalb der Vielzahl von Batteriemodulen (1000) befinden;
• erste (2210) und zweite (2220) elastische Elemente, die so konfiguriert sind, dass sie die obere Pressplatte (2110) und die untere Pressplatte (2120) mit einer Zugkraft miteinander verbinden; und
• ein Packgehäuse (2300), das so konfiguriert ist, dass es die Pressplatte (2100) umschließt,
wobei das Packgehäuse (2300) eine obere Packabdeckung (2310) und eine untere Packabdeckung (2320) umfasst, und
**dadurch gekennzeichnet, dass** ein drittes elastisches Element (2230) zwischen der oberen Packabdeckung (2310) und der oberen Pressplatte (2110) vorgesehen ist, um eine Presskraft bereitzustellen,
wobei ferner ein Abstandshalteabschnitt (2500), der so konfiguriert ist, dass er die Zugkraft ergänzt, zwischen der oberen Packabdeckung (2310) und der oberen Pressplatte (2110) vorgesehen ist.

2. Batteriepack (2000) nach Anspruch 1, wobei der Abstandshalteabschnitt (2500) eine viereckige Säule ist.

3. Batteriepack (2000) nach Anspruch 1, wobei der Abstandshalteabschnitt (2500) aus einem Metallmaterial hergestellt ist.

4. Vorrichtung, umfassend das Batteriepack nach Anspruch 1.

## Revendications

1. Bloc-batterie (2000) comprenant :
• une pluralité de modules de batterie (1000) empilés dans une direction verticale dans un état horizontal ;
• une plaque de pression (2100) comprenant une plaque de pression supérieure (2110) et une plaque de pression inférieure (2120) situées à l'extérieur de la pluralité de modules de batterie (1000) ;
• des premier (2210) et deuxième (2220) éléments élastiques configurés pour relier la plaque de pression supérieure (2110) et la plaque de pression inférieure (2120) l'une à l'autre avec une force de traction ; et
• un boîtier de bloc (2300) configuré pour envelopper la plaque de pression (2100),
dans lequel le boîtier de bloc (2300) comprend un couvercle de bloc supérieur (2310) et un couvercle de bloc inférieur (2320), et
**caractérisé en ce qu'**un troisième élément élastique (2230) est prévu entre le couvercle de bloc supérieur (2310) et la plaque de pression supérieure (2110) pour fournir une force de pression,
dans lequel en outre une partie de maintien de distance (2500) configurée pour compléter la force de traction est prévue entre le couvercle de bloc supérieur (2310) et la plaque de pression supérieure (2110).

2. Bloc-batterie (2000) selon la revendication 1, dans lequel la partie de maintien de distance (2500) est un pilier quadrangulaire.

3. Bloc-batterie (2000) selon la revendication 1, dans lequel la partie de maintien de distance (2500) est faite d'un matériau métallique.

4. Dispositif comprenant le bloc-batterie selon la revendication 1.
